# EUROPEAN PATENT SPECIFICATION

(11) **EP 0 979 932 B1**
(45) Date of publication and mention of the grant of the patent: **22.12.2004**
(21) Application number: 98901099.6
(22) Date of filing: 03.02.1998
(51) Int. Cl.: F02C 6/18, F02C 7/18, F01K 23/10, F02C 7/16

(54) **GAS TURBINE FOR COMBINED CYCLE POWER PLANT**
GASTURBINE FÜR EINE GAS-DAMPFKRAFTZENTRALE
TURBINE A GAZ POUR CENTRALE A CYCLE MIXTE

(43) Date of publication of application: 16.02.2000
(73) Proprietor: Mitsubishi Heavy Industries, Ltd., Tokyo 100-0005 (JP)
(72) Inventor: MATSUURA, Masaaki, Mitsubishi Heavy Ind., Ltd, Takasago-shi, Hyogo 676-0008 (JP); SUENAGA, Kiyoshi, Mitsubishi Heavy Ind., Ltd., Takasago-shi, Hyogo 676-0008 (JP); UEMATSU, Kazuo, Mitsubishi Heavy Ind., Ltd., Takasago-shi, Hyogo 676-0008 (JP)
(74) Representative: Ilgart, Jean-Christophe
(86) International application number: PCT/JP1998/000434
(87) International publication number: WO 1999/040305

(56) References cited:
- EP-A- 0 806 544
- FR-A- 2 174 497
- JP-A- 3 096 628
- JP-A- 8 284 687
- JP-A- 9 004 411
- JP-A- 9 189 236
- JP-A- 10 061 457

## Description

### Technical Field

The present invention relates to a gas turbine, especially, for a combined cycle power plant.

### Background Art

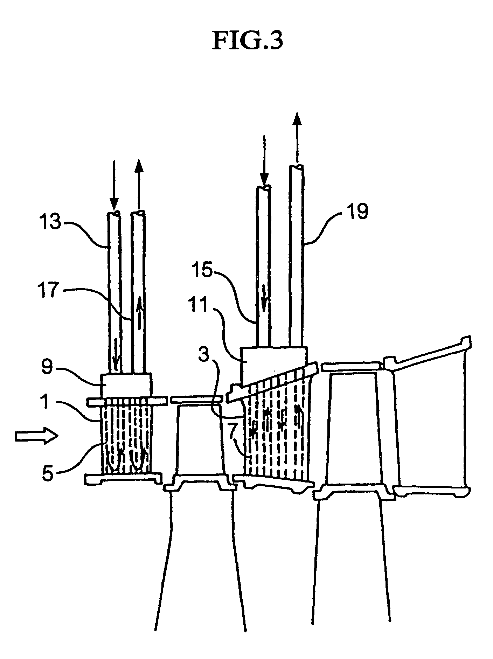

In a gas turbine, a steam cooling system in which blades are cooled by steam in proportion as an inlet temperature of high temperature combustion gas increase, has been proposed. Especially, in a combined cycle power plant comprising an exhaust heat recovery boiler in which exhaust gas from the gas turbine is used as a heat source, the following steps have been proposed to improve the thermal efficiency of the gas turbine and the combined efficiency of the plant: generating low temperature steam for cooling, using the low temperature steam in the gas turbine for cooling a turbine blade, using the heated cooling steam in a steam turbine, and recovering the thermal energy. An example of such a conventional steam cooling structure of a gas turbine blade is shown in Fig. 3.

Cooling paths 5 and 7 are formed inside of a first stage stationary blade 1 and a second stage stationary blade 3 respectively, which are respectively connected to heads 9 and 11, and those heads 9 and 11 are connected to independent cooling steam supply pipes 13 and 15, and cooling steam recovery pipes 17 and 19. Those cooling steam supply pipes 13 and 15 are connected to an exhaust heat recovery boiler (not shown in Fig. 3) and the cooling steam recovery pipes 17 and 19 are connected to the low pressure turbine of the steam turbine via a separate type superheater.

Furthermore, it has been proposed that the cooling steam flow in series with the cooling paths formed in each stage's turbine blades (Japanese Patent Application, Second Publication, No. Sho 63-40244).

As aforementioned, in a steam cooling system in which the cooling steam flows in parallel to each stage's stationary blades of the gas turbine in the steam turbine of the plant, is recovered, and also flow into the steam turbine, the above mentioned separate type superheater is required in order to regulate the condition of the cooling steam, therefore, the power plant is complicated in structure, large, and its total cost is high.

Furthermore, when cooling steam flows in series to each stage's stationary blades of the gas turbine the steam turbine, the whole structure of the power plant is complicated, and the pressure drop due to the flow becoming large, so that heat recovery efficiency in the steam turbine tends to decrease.

In view of the aforementioned, an object of the present invention to provide a gas turbine for a combined cycle power plant wherein the cooling steam used for heat recovery has a small pressure drop and a special apparatus such as a superheater or the like for a steam turbine is not required.

JP -A- 9 189 236 discloses a combined cycle power plant with an arrangement for cooling a gas turbine according to the preamble of claim 1. And EP-A-0 806 544 discloses a cooling steam arrangement for a rotor of a gas turbine, with larger supply and recovery passages inside the rotor and narrower - but interrupted at cavities - passages connecting successive blade stages and which too extend inside the rotor.

### Disclosure of Invention

To achieve the above object, the present invention provides a gas turbine as defined in claim 1, for a combined cycle power plant comprising a steam cooled system having a gas turbine for generating steam for cooling in an exhaust heat recovery boil to which exhaust gas from the gas turbine is supplied, and cooling the stationary blades with the steam for cooling; wherein the steam cooled system is constituted by connecting a cooling steam supply pipe from the exhaust heat recovery boiler to a cooling path formed in a first stage stationary blade, connecting a cooling steam recovery pipe connecting a steam turbine to a cooling path formed in a second stage stationary blade, and forming a cooling steam connecting path which has a larger cross-sectional area than said supply and recovery pipes, to connect the cooling paths formed in the above first stage and second stage stationary blades.

The gas turbine for the combined cycle power plant of the present invention generates the steam for cooling in the exhaust heat recovery boiler to which the exhaust gas from the gas turbine is supplied and cools the stationary blades with the steam for cooling, wherein the cooling steam recovery pipe from the aforesaid exhaust heat recovery boiler is connected to the cooling path formed in the first stage stationary blade, the cooling steam recovery pipe connecting the steam turbine to the cooling path formed in the second stage stationary blade, and a cooling steam connecting path, which has a relatively large cross-sectional area, is formed to connect cooling paths formed in the above first stage and second stage stationary blades, so that the steam for cooling, which has flowed in the cooling paths in the first stage and second stage stationary blades, can be continuously used in the steam turbine as steam for cooling because the above steam for cooling has a suitable temperature to drive a medium-pressure turbine of the steam turbine and also the cooling steam connecting path has a relatively large cross-sectional area, and the pressure drop is as a whole small. Therefore, since no special apparatus such as a heating apparatus is required, and the steam for cooling is recovered and used, an increase in manufacturing cost can be avoided and also the combined efficiency of the combined cycle power plant can be improved.

### Brief Description of Drawings

Fig.1 is a conceptual system diagram showing the prominent features of one embodiment according to the present invention.
Fig.2 is a system diagram of the combined cycle power of the embodiment according to the present invention.
Fig.3 is a conceptual system diagram showing an embodiment of a steam cooling system in a conventional gas turbine blade.

### Best Mode for Carrying Out the Invention

A preferred embodiment of the present invention is explained by referring to the drawings as follows.

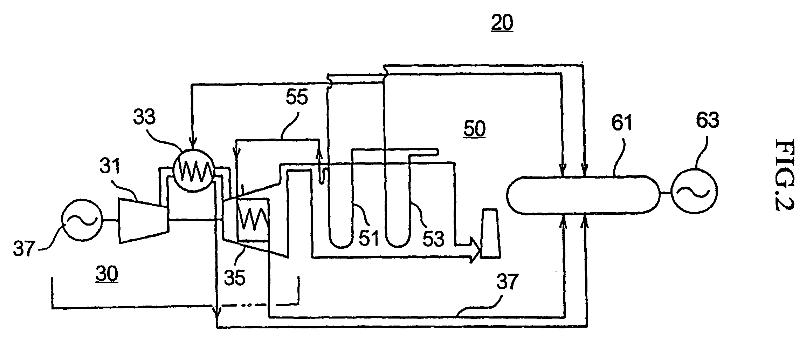

A system of a combined cycle power plant 20 is explained by referring to Fig. 2. The gas turbine 30 comprises a compressor 31, a combustor 33, and a turbine part 35, wherein the compressor 31 compresses air, the compressed air is burned by blowing fuel in the combustor 33, a rotor is driven by supplying a high temperature combustion gas to the turbine part 35, and finally, electrical energy is extracted by driving a generator 63. Exhaust gas in the gas turbine 30 is supplied to an exhaust heat recovery boiler 50, high-pressure steam and medium-pressure steam are respectively generated in a high-pressure evaporator 51 and a medium-pressure evaporator 53, and those two types of steam are supplied to, for example, a two-stage steam turbine 61 to drive it, and finally, electrical energy is extracted by driving a generator 63. Then, a part of the medium-pressure steam is used for cooling the combustor 33 and a part of the high-pressure steam is supplied as steam for cooling to the turbine part 35 of the gas turbine 30 via the cooling steam supply pipe 55. Furthermore, the steam for cooling heated by using for cooling is supplied the steam turbine 61 via the cooling steam recovery pipe 37 and used for driving the turbine.

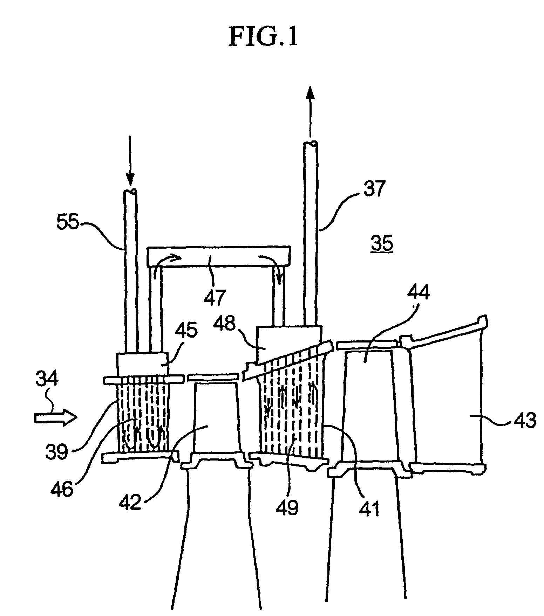

In Fig. 1, the structure of the steam cooling system of the turbine part 35 is conceptually shown. In Fig. 1, a first stage stationary blade 39, a second stage stationary blade 41, and a third stage stationary blade 43 are provided as stationary blades and their blade parts are set in the direction of the circumference of the stationary blades. Moreover, a first stage moving blade 42 behind the first stage stationary blade 39 and a second stage moving blade 44 behind the second stage stationary blade 41 are provided as moving blades, and the high temperature combustion gas, as shown by arrow 34, flows through each stage of blade rows and rotates by driving moving blades 42 and 44. The cooling steam supply pipe 55 is connected to a junction 45 of the first stage stationary blade 39, and its steam flowing path is connected to a cooling path 46 in the first stage stationary blade 39. The junction 45 of the first stage stationary blade 39 is connected to a junction 48 of the second stage stationary blade 41 via a connecting pipe 47, its steam path is connected to a cooling path 49 in the second stage stationary blade 41, and finally, the steam path is connected to the cooling steam recovery pipe 37. Further, the cross-sectional area of the cooling steam connecting path of the connecting pipe 47 is set to be larger than the other parts.

In the gas turbine 30 comprising the constituents mentioned above, the first stage stationary blade 39, the second stage stationary blade 41, the third stage stationary blade 43, etc., tend to undergo increases in temperature because of the high temperature combustion gas which flows into the blades contacts and heats the blades. A part of the high-temperature steam generated in the high-pressure evaporator 51 in the exhaust heat recovery boiler 50 works as steam for cooling and flows into the turbine part 35 through the cooling steam supply pipe 55. The steam maintains its temperature, for example, 350°C, at a part of the junction 45 (the inlet of the first stage stationary blade 39), and cools the inside of the first stage stationary blade 39 by flowing through the cooling path 46. The metal in the first stage stationary blade 39 is maintained at, for example, 850°C or less by the above cooling. The steam outflowing through the connecting pipe 47 is maintained at approximately 450°C and cools the inside of the second stage stationary blade 41 by flowing in the cooling path 49 via the path in the branched assembly 48. As mentioned above, the steam for cooling is heated to, for example, approximately 560°C, and sent to the steam turbine 61 through the cooling steam recovery pipe 37, and used as steam for driving the turbine.

## Claims

1. A gas turbine, for a combined cycle power plant, comprising stationary blades (39, 41) which are cooled by steam generated in an exhaust heat recovery boiler (51) in the combined cycle power plant, the gas turbine for a combined cycle power plant comprising a cooling steam supply pipe (55) from the exhaust heat recovery boiler connected to a cooling path (46) formed in a first stage stationary blade (39), a cooling steam recovery pipe (37) communicating to a steam turbine (61) connected to a cooling path (49) formed in a second stage stationary blade (41), and a cooling steam connecting path (47), formed to connect the cooling paths (46, 49) in the first and second stage stationary blades, **characterised in that** said cooling steam connecting path (47) has a larger cross-sectional area than a cross-sectional area of each of the cooling steam supply pipe (55) and the cooling steam recovery pipe (37).

2. A gas turbine according to claim 1, wherein the cooling steam connecting path is defined by a pipe (47).

## Patentansprüche

1. Gasturbine für ein Kombi-Kraftwerk, mit Leitschaufeln (39,41), die durch in einem Abwärme-Rückgewinnungskessel (51) in dem Kombi-Kraftwerk erzeugten Dampf gekühlt werden, wobei die Gasturbine für ein Kombi-Kraftwerk ein Kühldampf-Zuführrohr (55) von dem Abwärme-Rückgewinnungskessel, das mit einem in einer Leitschaufel (39) der ersten Stufe ausgebildeten Kühlungsweg (46) verbunden ist, ein mit einer Dampfturbine (61) kommunizierendes Kühldampf-Rückgewinnungsrohr (37), das mit einem in einer Leitschaufel (41) der zweiten Stufe ausgebildeten Kühlungsweg (49) verbunden ist, und einen Kühldampf-Verbindungsweg (47), der zur Verbindung der Kühlungswege (46,49) in den Leitschaufeln der ersten bzw. zweiten Stufe ausgebildet ist, umfasst,
**dadurch gekennzeichnet, dass** der Kühldampf-Verbindungsweg (47) eine größere Querschnittsfläche hat als eine jeweilige Querschnittsfläche des Kühldampf-Zuführrohrs (55) und des Kühldampf-Rückgewinnungsrohrs (37).

2. Gasturbine nach Anspruch 1, wobei der Kühldampf-Verbindungsweg durch ein Rohr (47) festgelegt ist.

## Revendications

1. Turbine à gaz, pour une centrale à cycle mixte, comprenant des aubes fixes (39, 41) qui sont refroidies par la vapeur générée dans une chaudière à récupération de chaleur d'échappement (51) dans la centrale à cycle mixte, la turbine à gaz pour une centrale à cycle mixte comprenant une conduite d'alimentation en vapeur de refroidissement (55) provenant de la chaudière à récupération de chaleur d'échappement raccordée à un trajet de refroidissement (46) formé dans une aube fixe de premier étage (39), une conduite de récupération de vapeur de refroidissement (37) communiquant avec une turbine à vapeur (61) étant raccordée à un trajet de refroidissement (49) formé dans une aube fixe de deuxième étage (41), et un trajet de raccordement de vapeur de refroidissement (47), formé pour raccorder les trajets de refroidissement (46, 49) dans les aubes fixes de premier et deuxième étages, **caractérisée en ce que** ledit trajet de raccordement de vapeur de refroidissement (47) a une section plus grande qu'une section de chacune de la conduite d'alimentation en vapeur de refroidissement (55) et de la conduite de récupération de vapeur de refroidissement (37).

2. Turbine à gaz selon la revendication 1, dans laquelle le trajet de raccordement de vapeur de refroidissement est défini par une conduite (47).
